Europäisches Patentamt

European Patent Office

Office européen des brevets

(11) Numéro de publication: **0 374 024**
**A1**

## (12) DEMANDE DE BREVET EUROPEEN

(21) Numéro de dépôt: **89403417.2**

(22) Date de dépôt: **11.12.89**

(51) Int. Cl.⁵: **C03C 1/00, C03B 8/02, C03C 3/102**

(30) Priorité: **16.12.88 FR 8816603**

(43) Date de publication de la demande:
**20.06.90 Bulletin 90/25**

(84) Etats contractants désignés:
**DE FR GB**

(71) Demandeur: **RHONE-POULENC CHIMIE**
**25, quai Paul Doumer**
**F-92408 Courbevoie Cédex(FR)**

(72) Inventeur: **Nusbaum, Hubert**
**14, Lotissement Le Colombier Boissy**
**Fresnoy**
**F-60440 Nanteuil le Haudouin(FR)**
Inventeur: **Zarzicki, Jerzy**
**102, Impasse des Saules**
**F-34980 Saint Clément de Rivière(FR)**

(74) Mandataire: **Dubruc, Philippe et al**
**RHONE-POULENC CHIMIE Service Brevets**
**Chimie 25, quai Paul-Doumer**
**F-92408 Courbevoie Cédex(FR)**

(54) **Composé verrier, précurseur de ce composé et gel à base de silice, de plomb et d'un métal alcalin et leur procédé de préparation.**

(57) L'invention concerne un gel de silice, son procédé de préparation et son utilisation dans la préparation de compositions verrières.

Le procédé de préparation du gel est caractérisé en ce qu'on mélange un alcoxyde de silicium, un alcoxyde ou un sel organique d'un métal alcalin et un sel organique de plomb dans un solvant comprenant soit un éther-oxyde soit un mélange d'un acide organique et d'un alcool, puis on hydrolyse le mélange ainsi formé.

EP 0 374 024 A1

## COMPOSE VERRIER, PRECURSEUR DE CE COMPOSE ET GEL A BASE DE SILICE, DE PLOMB ET D'UN METAL ALCALIN ET LEUR PROCEDE DE PREPARATION

La présente invention concerne un composé verrier, un précurseur de ce composé et un gel à base de silice, de plomb et d'un métal alcalin et leurs procédés de préparation.

Les procédés de préparation de composés verriers sont bien connus.

Mais plusieurs problèmes soulèvent de grandes difficultés tant au niveau du produit que du procédé. Parmi ceux-ci et sans être exhaustif, on peut citer la pureté, la granulométrie, l'homogénéité et la densité pour le produit, la facilité de mise en oeuvre, le choix des matériaux utilisés et les économies d'énergie pour le procédé.

Ainsi, bien qu'il s'agisse d'une technique travaillée depuis longtemps, les compositions verrières sont obtenues par fusion des divers ingrédients, ce qui outre les problèmes d'énergie et de mise en oeuvre dus à l'utilisation de hautes températures pendant un temps prolongé, pose de sérieux problèmes en ce qui a trait au contrôle des formulations pour verre, et en particulier de leur homogénéisation.

Un premier objet de l'invention est un produit ou précurseur d'un composé verrier présentant une bonne homogénéité et qui puisse être d'une utilisation facile dans la préparation de compositions verrières.

Un second objet de l'invention est un gel permettant d'accéder facilement au précurseur précité.

Un troisième objet de l'invention est un procédé simple pour la préparation de ces produits.

Dans ce but, le gel selon l'invention, à base de silice, de plomb et d'un métal alcalin, est caractérisé en ce qu'il est susceptible d'être obtenu par un procédé dans lequel on mélange tout d'abord un alcoxyde de silicium, un alcoxyde d'un métal alcalin et un sel organique de plomb dans un solvant comprenant soit un éther-oxyde soit un mélange d'un acide organique et d'un alcool, puis on hydrolyse le mélange formé.

Plus particulièrement, l'invention concerne aussi un gel à base de silice, de plomb et d'un métal alcalin caractérisé en ce qu'il possède un spectre infra-rouge présentant des bandes à 1 560, 1 405, 1 340 et 655 $cm^{-1}$ et un spectre RMN présentant deux pics du $^{29}Si$ à - 98 p.p.m. et - 108 p.p.m..

Par ailleurs, le précurseur selon l'invention, d'un composé verrier à base de silice, de plomb et d'un métal alcalin est caractérisé en ce qu'il est susceptible d'être obtenu par calcination des gels tels que défini ci-dessus.

En outre, l'invention concerne un composé verrier à base de silice, de plomb et d'un métal alcalin caractérisé en ce qu'il est obtenu par fusion du précurseur précité.

Enfin, le procédé selon l'invention de préparation d'un gel à base de silice, de plomb et d'un métal alcalin, est caractérisé en ce qu'on mélange un alcoxyde de silicium, un alcoxyde ou un sel organique d'un métal alcalin et un sel organique de plomb dans un solvant comprenant soit un éther-oxyde soit un mélange d'un acide organique et d'un alcool, puis on hydrolyse le mélange ainsi formé.

Le précurseur selon l'invention fond à une température assez faible, généralement de l'ordre de 1 000 °C, et se prête particulièrement bien à la préparation de compositions verrières.

D'autres caractéristiques et détails de l'invention apparaîtront plus clairement à la lecture de la description et des dessins annexés dans lesquels :

- la figure 1 est un spectre infra-rouge d'un gel selon l'invention,
- la figure 2 est un spectre RMN du $^{29}Si$ du même gel,
- la figure 3 est un spectre RMN du $^{29}Si$ d'un précurseur issu du gel précédent,
- la figure 4 est un spectre RMN du $^{29}Si$ d'un verre issu du précurseur précédent.

Au préalable, il est précisé ici et pour l'ensemble de la description que l'invention concerne des nouveaux gels, des précurseurs de composés verriers et des composés verriers en tant que tels, ces produits pouvant être définis notamment par leur procédé de préparation. En conséquence, même en l'absence de précisions contraires, tout l'enseignement de la présente description sur quelque caractéristique ou étape que ce soit des différents procédés décrits, s'applique aussi au produit en tant que tel, susceptible d'être obtenu par le procédé mettant en oeuvre cette caractéristique ou étape.

Le gel de l'invention est susceptible d'être préparé par un procédé dont l'une des caractéristiques principales est la nature des réactifs utilisés.

Le silicium est apporté par un alcoxyde de silicium. On utilise plus particulièrement un tétraalcoxyde de silicium et notamment le tétraméthoxysilane ou tétraéthoxysilane.

Le métal alcalin peut être apporté sous forme d'un alcoxyde. Suivant la nature du silicate que l'on désire préparer et notamment de la composition verrière recherchée, on emploie généralement un alcoxyde de lithium, de sodium, ou de manière préférée de potassium, plus particulièrement sous forme de méthylate, éthylate ou terbutoxyde. Le métal alcalin peut aussi être apporté sous forme d'un sel organique. Comme sel organique, on peut citer les acétates en particulier.

Le plomb est aussi amené sous forme d'un sel organique.

On utilise plus particulièrement le sel de plomb d'un acide aliphatique saturé. Selon un mode de réalisation préféré de l'invention, ce sel est l'acétate de plomb.

Enfin, le mélange des réactifs se fait dans un solvant ou un mélange de solvants organiques.

Bien entendu, ce solvant devra être tel que les réactifs décrits ci-dessus y soient solubles et qu'on obtienne un milieu homogène après l'introduction des réactifs sous les formes précitées.

Selon un premier mode de réalisation de l'invention, on peut utiliser comme solvant les éthers-oxydes, et particulièrement les éthers-oxydes glycoliques. Par exemple, on peut citer le méthoxy-2 éthanol (ou éther monométhylique de l'éthylène glycol) ou l'éther monoéthylique du diéthylèneglycol.

Il est aussi possible, selon un second mode de réalisation de l'invention, d'utiliser comme solvant un mélange d'un acide organique et d'un alcool.

On utilise de préférence un acide aliphatique saturé. On choisit aussi, généralement, l'alcool parmi les alcools saturés.

La mise en présence et le mélange des réactifs et du solvant peuvent se faire d'une manière quelconque et ils constituent la première étape du procédé de l'invention.

Toutefois, il peut être préférable, notamment dans le cas d'un solvant éther-oxyde, de mélanger tout d'abord l'alcoxyde du métal alcalin avec le solvant organique. Puis dans un deuxième temps, on ajoute l'alcoxyde de silicium au mélange obtenu précédemment. Enfin, dans un dernier temps, on ajoute le sel de plomb, de préférence en une seule fois. On peut noter qu'il peut être avantageux d'ajouter au milieu réactionnel une certaine quantité de l'acide dont provient le sel de plomb pour éviter une précipitation de cet élément.

Généralement, le mélange des réactifs se fait à la température ambiante.

La deuxième étape principale du procédé de l'invention consiste à hydrolyser le mélange ou le produit de la réaction issu de la première étape.

Il est à noter toutefois que selon des modes particuliers de réalisation de l'invention, on peut ne pas procéder à l'hydrolyse directement après la première étape précitée.

Ainsi, il est avantageux de laisser vieillir le mélange réactionnel pendant une période de l'ordre de 24 heures à la même température que celle à laquelle a été conduite la première étape. Pendant une partie de ce vieillissement, on peut maintenir le mélange sous agitation. Ce vieillissement apporte une meilleure homogénéité du mélange.

Il est aussi possible de chauffer à reflux le mélange pour améliorer l'homogénéité.

L'hydrolyse se fait de préférence à une température d'au plus 20°C et plus particulièrement à une température comprise entre 0 et 20°C. C'est pourquoi, généralement, on préfère refroidir le mélange issu de la première étape avant l'hydrolyse.

L'hydrolyse se fait habituellement par addition au milieu réactionnel d'eau pure ou acidifiée ou d'un mélange eau-solvant.

L'hydrolyse entraine la formation d'un gel. Il est préférable de laisser mûrir le gel en le maintenant à une température constante habituellement identique à celle à laquelle a été conduite l'étape d'hydrolyse.

On obtient un gel humide qui peut être séché à une température de 100°C environ.

Ce gel, après séchage à 100°C présente généralement la composition suivante :

$SiO_2$ 30 % - 80 % en poids

Rapport molaire $SiO_2/PbO \geq 1$ et plus particulièrement $\geq 3$

Rapport molaire $Me_2O/PbO \leq 5$ et plus particulièrement $\leq 3$

Me étant un métal alcalin, plus particulièrement le potassium.

L'invention concerne aussi, en tant que tel, un gel à structure bien spécifique et qui peut être aussi obtenu notamment par le procédé ci-dessus.

La structure de ce gel peut être appréhendée par son spectre infra-rouge.

C'est ainsi que ce spectre d'absorption I.R., obtenu à partir d'un gel séché à 100°C et par la technique des pastilles $KB_r$, présente des bandes à 1 560, 1 405, 1 340, et 655 $cm^{-1}$. Ces bandes sont dues à la présence de groupements acétate dans le gel.

D'autre part, le spectre RMN du $^{29}Si$ de ce gel, toujours après séchage à 100°C, présente deux pics.

Le premier à - 98 p.p.m. correspond aux siliciums de type $Q_3$. Le second à - 108 p.p.m. correspond aux siliciums de type $Q_4$. Selon un mode de réalisation particulier, notamment pour les compositions à base de potassium et à teneur plus riche en $SiO_2$ (d'environ au moins 40 % en poids), le gel de l'invention présente un spectre RMN dans lequel le pic à - 108 p.p.m. est celui d'intensité la plus importante, ce qui indique une réticulation poussée du réseau de silice.

Les spectres $RMN^{29}$ ont été établis pour l'étude du noyau $^{29}Si$ dans les conditions expérimentales suivantes :

| Appareil utilisé | CXP 300 spectromètre BRUCKER |
|---|---|
| Séquence utilisée | Simple impulsion $\pi/2$ durée 9 microsecondes |
| Intervalle entre impulsions | 4,0 s |
| Nombre d'accumulations | de 3 100 à 3 600 |
| Rotation à l'angle magique | oui |
| Fréquence de rotation | 3 KHz |
| Référence O p.p.m. | Tétraméthylsilane |

On notera, enfin, que ce gel peut présenter la même composition que celle qui a été donnée ci-dessus.

Une autre spécificité de ce gel réside dans l'évolution de sa structure lorsqu'il est soumis à un traitement thermique.

Les gels qui viennent d'être décrits ci-dessus sont des produits qui tout au plus n'ont été que séchés. Ils contiennent encore des traces de residus organiques qui pourraient nuire à leur utilisation dans la préparation de composés verriers. Pour éliminer ces traces, il est possible de traiter thermiquement ces gels.

Ce traitement thermique est réalisé généralement après broyage à la granulométrie voulue. Il consiste essentiellement en une calcination à une température d'environ 450 à 500° C, cette calcination pouvant se faire par paliers et montées progressives en température et sous balayage d'oxygène. On obtient, après traitement thermique, le précurseur de composés verriers de l'invention.

On a ainsi soumis le gel, défini plus haut par son spectre I.R., à des températures successives de 300, 350 et 500° C. A l'issue de chacun de ces traitements, on établit le spectre I.R. du produit. On a ainsi pu constater que les bandes à 1 560, 1 405, 1 340 et 655 $cm^{-1}$ étaient encore présentes à 300° C mais qu'elles avaient disparues à 350° C.

Par ailleurs, le spectre RMN du produit issu du traitement à 500° C présente deux pics du $^{29}Si$ à - 96 p.p.m. (silicium $Q_3$) et à - 108 p.p.m. (silicium $Q_4$).

D'autre part, dans le cas où l'on est parti d'un gel selon le mode de réalisation particulier décrit plus haut, c'est-à-dire avec un pic à - 108 p.p.m. de plus grande intensité que celle du pic à - 98 p.p.m., on constate, de plus, que l'intensité du pic à - 108 p.p.m. diminue, le premier pic à - 96 p.p.m. pouvant présenter généralement la plus grande intensité.

Cette inversion des intensités des pics peut s'expliquer par un phénomène de dépolymèrisation résultant de la pénétration du plomb dans le réseau de silice.

En ce qui concerne enfin le précurseur obtenu par calcination des gels qui viennent d'être décrits plus haut, celui-ci, selon un mode de réalisation de l'invention, peut présenter la composition suivante :

$SiO_2$ : 40 % - 90 % en poids

Rapport molaire $SiO_2/PbO \geq 1$ et plus particulièrement $\geq 3$

Rapport molaire $Me_2O/PbO \leq 5$ et plus particulièrement $\leq 3$

Me étant un métal alcalin, de préférence le potassium.

Le passage au verre à partir du précurseur décrit plus haut, se fait d'une manière connue en soit, par un traitement thermique en faisant fondre le précurseur et en maintenant la température nécessaire pour l'affinage. La température de fusion est habituellement plus faible que celle des compositions verrières obtenues par les procédés classiques.

Il est bien entendu possible, pour l'affinage, d'utiliser tout agent affinant connu tel que par exemple $Sb_2O_3$, $As_2O_3$, et un nitrate alcalin.

On constate que le spectre RMN du verre obtenu a une allure identique à celle du spectre du précurseur. Ceci indique donc que le procédé de l'invention permet l'obtention de produit présentant très tôt, notamment dès 450° C, la structure finale du verre.

Enfin, selon un mode particulier de réalisation de l'invention, le composé verrier présente la composition suivante :

$SiO_2$ : 40 - 90 % en poids

Rapport molaire $SiO_2/PbO \geq 1$ et plus particulièrement $\geq 3$

Rapport molaire $Me_2O/PbO \leq 5$ et plus particulièrement $\leq 3$

Me étant un métal alcalin.

Des exemples concrets mais non limitatifs vont maintenant être donnés :

Exemple 1 :

On dissout à 20°C 1,4024 g de méthylate de potassium (2/100 de moles) dans 38,8 cm³ de methoxy-2-ethanol ( 49/100 de moles).

On obtient une solution limpide incolore à laquelle on ajoute 15,6 cm³ de tétraethoxysilane (7/100 de moles). Ce mélange reste sous agitation pendant 20 mn à 20°C.

A la solution limpide incolore obtenue, on ajoute 3,7933g d'acétate de plomb Pb(O₂C₂H₃)₂ 3H₂0 (1/100 de moles).

Après un vieillissement de la solution de 24 heures à 20°C (dont 4 heures d'agitation) on diminue la température jusqu'à 1°C.

On ajoute alors 5,04 cm³ d'eau (R = H₂O/Si = 4) sous agitation forte.

Après 2mn on arrête l'agitation. Au bout de 20 mn la surface se fige, on obtient un gel.

Le gel est maintenu à une température comprise entre 1 et 3°C pendant 16 heures.

Le gel séché à 100°C puis broyé est calciné ensuite sous balayage d'oxygène suivant le protocole ci-dessous

| montée en température | : 5°C/mn |
| palier | : 3 heures à 300°C |
| | : 3 heures à 350°C |
| | : 3 heures à 400°C |
| | : 3 heures à 450°C |
| | : 3 heures à 500°C |

On obtient un verre par chauffage en 3 heures à 1200°C du gel calciné.

Ce verre présente la composition suivante :

7SiO₂, 1 PbO, 1K₂O


Exemple 2

On mélange à 20°C, 15,6 cm³ de tétraéthoxysilane (7/100 de mole) dans 15,6 cm³ d'éthanol et on agite pendant 5 minutes. On ajoute ensuite progressivement à cette solution 0,7012 g de méthylate de potassium (1/100 de mole) à 20°C. On agite pendant 30 minutes. On obtient ainsi une solution A.

On forme ensuite une solution B en dissolvant à 20°C 3,7933 g d'acétate de plomb trihydraté (1/100 de mole) dans 5 cm³ d'acide acétique. On ajoute enfin 10 cm³ d'éthanol et on agite 10 minutes à 20°C.

On mélange ensuite les solutions A et B à 20°C en agitant 30 minutes. A la solution C ainsi obtenue, on ajoute 2 cm³ d'eau. Le rapport molaire H₂O/Si(OC₂H₅)₄ est égal à 2 compte tenu de l'eau apportée par l'acétate de plomb.

Après 12 heures, un gel homogène est obtenu de composition suivante :

7SiO₂, 1 PbO, O,5K₂O


Exemple 3

On dissout à 20°C 2,8048 g de méthylate de potassium (4/100 de mole) dans 47,6 cm³ de méthoxy-2-éthanol. On mélange ensuite à cette solution 17,9 cm³ de tétraéthoxysilane (8/100 de mole). Ce mélange reste pendant 15 mn à 20°C sous agitation. On y dissout enfin 7,5866 g d'acétate de plomb trihydraté (2/100 de mole) à 20°C en ajoutant l'acétate en une seule fois. On chauffe à reflux 1 heure la solution ainsi obtenue.

Cette solution est refroidie à 0°C. On mélange par ailleurs 15,8 cm³ de méthoxy-2-éthanol (0,2 mole) et 4,7 cm³ d'eau pendant 15 minutes à 20°C (rapport molaire H₂O/Si(OC₂H₅)₄ = 4 compte tenu de l'eau apportée par l'acétate de plomb). Ce mélange est refroidi à 0°C et incorporé à la solution précitée. On agite pendant 10 minutes. On obtient au bout de 20 minutes à 0°C, un gel homogène de composition :

4SiO₂, 1 PbO, 1K₂O

On le laisse vieillir, humide, à 0°C pendant un temps égal au temps de gélification. Puis, on le sèche à 100°C.

Le gel est ensuite broyé puis calciné sous balayage d'oxygène selon le protocole suivant :

| Vitesse de chauffe | : 5° C/mn |
| Palier | : 3 heures à 250° C |
| | : 3 heures à 300° C |
| | : 3 heures à 350° C |
| | : 3 heures à 400° C |
| | : 3 heures à 450° C |

On obtient un précurseur qui, par fusion à 1 200° C, donne un verre.

Exemple 4

Préparation d'un gel et d'un verre de formule $7SiO_2, 1PbO, 1K_2O$

On procède de la même manière qu'à l'exemple 3 avec les quantités suivantes :

31,7 cm$^3$ de méthoxy-2-éthanol (40/100 de mole),

1,4024 g de méthylate de potassium (2/100 de mole),

15,6 cm$^3$ de tétraétoxysilane (7/100 de mole),

3,7933 g d'acétate de plomb trihydraté (1/100 de mole).

l'hydrolyse étant faite avec un mélange de 23,8 cm$^3$ de méthoxy-2-éthanol (30/100 de mole) et de 4,5 cm$^3$ d'eau (25/100 de mole, rapport molaire $H_2O/Si(OC_2H_5)_4$ = 4 compte tenu de l'eau apportée par l'acétate de plomb).

La gélification est complète 35 minutes après la fin de l'introduction de l'eau. On fait vieillir le gel à 0° C pendant un temps égal au temps de gélification, puis on le sèche à 100° C.

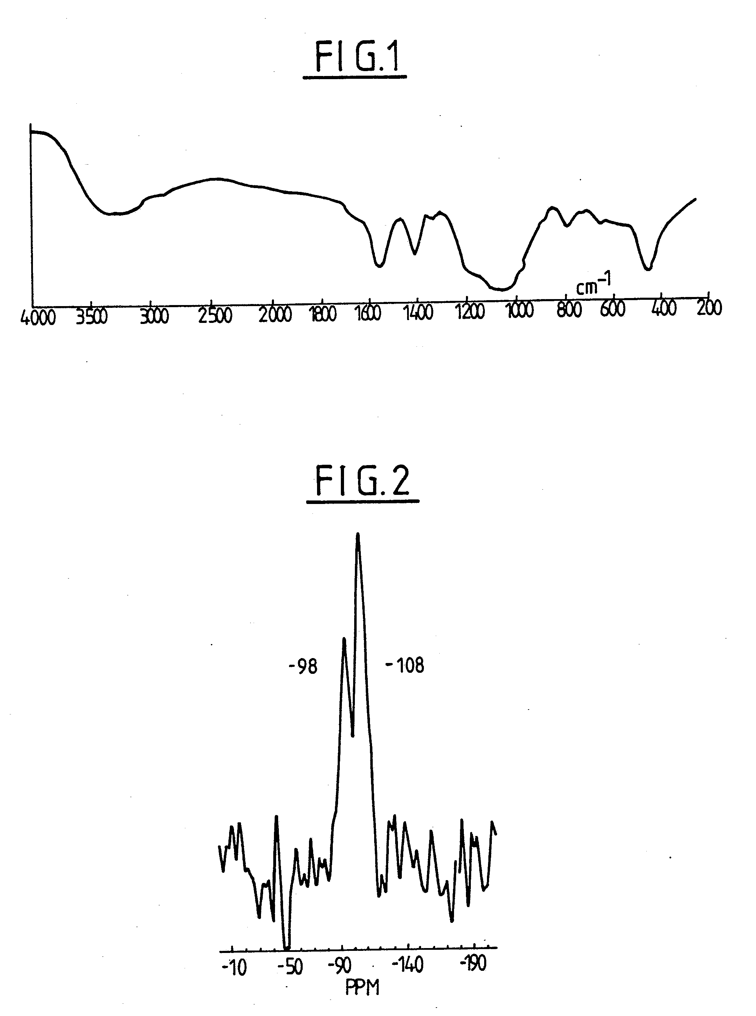

Ce gel présente le spectre I.R. de la figure 1 et le spectre RMN de la figure 2.

Le gel est ensuite broyé puis calciné selon le même protocole que celui de l'exemple 1.

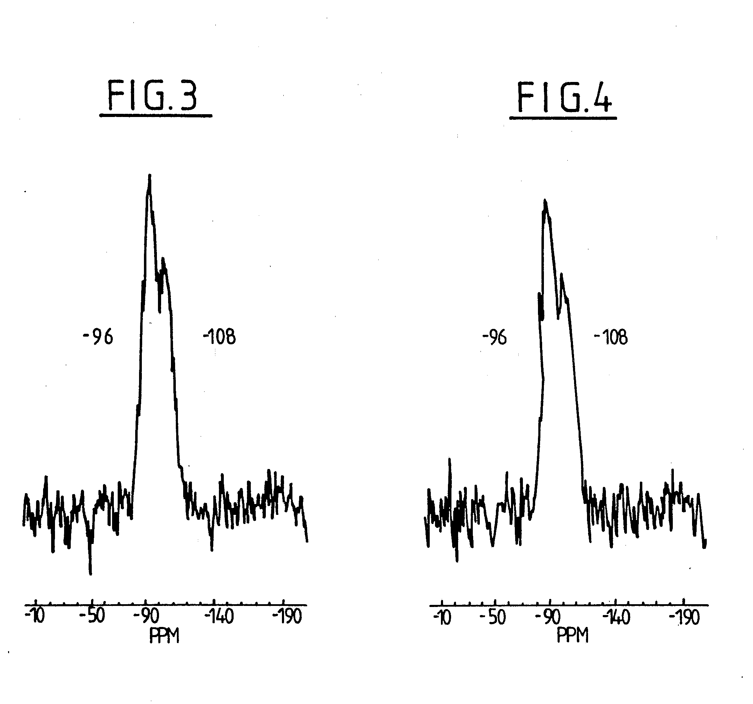

Le gel calciné ou précurseur présente le spectre RMN de la figure 3. Ce produit chauffé à 1 200° C pendant 3 heures donne un verre ayant le spectre RMN de la figure 4.

Comme on peut le constater, ce spectre est semblable à celui de la figure 3.

Bien entendu, l'invention n'est nullement limitée au modes de réalisation décrits qui n'ont été donnés qu'à titre d'exemples. En particulier, elle comprend tous les moyens constituant des équivalents techniques des moyens décrits ainsi que leurs combinaisons si celles-ci sont mises en oeuvre dans le cadre de la protection comme revendiquée.

**Revendications**

1. Gel à base de silice, de plomb et d'un métal alcalin, caractérisé en ce qu'il est susceptible d'être obtenu par un procédé dans lequel on mélange tout d'abord un alcoxyde de silicium, un alcoxyde ou un sel organique d'un métal alcalin et un sel organique de plomb dans un solvant comprenant soit un éther-oxyde soit un mélange d'un acide organique et d'un alcool, puis on hydrolyse le mélange ainsi formé.

2. Gel à base de silice, de plomb et d'un métal alcalin caractérisé en ce qu'il possède un spectre infra-rouge présentant des bandes à 1 650, 1 405, 1 340 et 655 cm$^{-1}$ et un spectre RMN présentant deux pics du $^{29}Si$ à - 98 p.p.m. et - 108 p.p.m..

3. Gel selon la revendication 2, caractérisé en ce qu'il présente un spectre RMN dans lequel le pic à - 108 p.p.m. est le plus important en intensité.

4. Gel selon la revendication 2 ou 3, caractérisé en ce que, lorsqu'il est soumis à un traitement thermique à 300, 350 et 500° C, il présente des spectres I.R. tels que les bandes précitées sont encore présentes sur le spectre du produit obtenu à l'issue du traitement à 300° C et absentes sur celui du produit obtenu après le traitement à 350° C, et un spectre RMN du produit issu du dernier traitement à 500° C possédant 2 pics du $^{29}Si$ à - 96 p.p.m. et - 108 p.p.m..

5. Gel selon la revendication 4, caractérisé en ce qu'il présente un spectre RMN dans lequel le pic à - 96 p.p.m. est le plus important en intensité.

6. Gel selon l'une des revendications 1 à 5, caractérisé en ce qu'il présente la composition suivante :

$SiO_2$ 30 % - 80 % en poids

Rapport molaire $SiO_2/PbO \geq$ 1 et plus particulièrement $\geq$ 3

Rapport molaire $Me_2O/PbO \leq$ 5 et plus particulièrement $\leq$ 3

Me étant un métal alcalin.

7. Précurseur d'un composé verrier à base de silice, de plomb et d'un métal alcalin, caractérisé en ce qu'il est susceptible d'être obtenu par calcination du gel selon l'une des revendications précédentes.

8. Précurseur d'un composé verrier à base de silice, de plomb et d'un métal alcalin, caractérisé en ce qu'il possède un spectre RMN présentant deux pics $^{29}$Si à - 96 p.p.m. et - 108 p.p.m..

9. Précurseur selon la revendication 8, caractérisé en ce qu'il présente un spectre RMN dans lequel le pic à - 96 p.p.m. est le plus important en intensité.

10. Précurseur selon l'une des revendications 7 à 9, caractérisé en ce qu'il présente la composition suivante :

$SiO_2$ 40 % - 90 % en poids

Rapport molaire $SiO_2/PbO \geqq$ 1 et plus particulièrement $\geqq$ 3

Rapport molaire $Me_2O/PbO \leqq$ 5 et plus particulièrement $\leqq$ 3

Me étant un métal alcalin.

11. Composé verrier à base de silice, de plomb et d'un métal alcalin caractérisé en ce qu'il est obtenu par fusion du précurseur selon l'une des revendications 7 à 10.

12. Composé verrier selon la revendication 11, caractérisé en ce qu'il présente la composition suivante :

$SiO_2$ 40 % - 90 % en poids

Rapport molaire $SiO_2/PbO \geqq$ 1 et plus particulièrement $\geqq$ 3

Rapport molaire $Me_2O/PbO \leqq$ 5 et plus particulièrement $\leqq$ 3

Me étant un métal alcalin.

13. Procédé de préparation d'un gel à base de silice de plomb et d'un métal alcalin, caractérisé en ce qu'on mélange un alcoxyde de silicium, un alcoxyde ou un sel organique d'un métal alcalin et un sel organique de plomb dans un solvant comprenant soit un éther-oxyde soit un mélange d'un acide organique et d'un alcool, puis on hydrolyse le mélange ainsi formé.

14. Procédé selon la revendication précédente, caractérisé en ce qu'on hydrolyse le mélange à une température d'au plus 20° C, de préférence comprise entre 0 et 20° C.

15. Procédé selon la revendication 13 ou 14, caractérisé en ce que préalablement à l'hydrolyse, on laisse vieillir le mélange précité.

16. Procédé selon l'une des revendications 13 à 15, caractérisé en ce que préalablement à l'hydrolyse, on chauffe a reflux le mélange précité.

17. Procédé selon l'une des revendications 13 à 16, caractérisé en ce qu'après l'hydrolyse, on laisse mûrir le gel.

18. Procédé selon l'une des revendications précédentes, caractérisé en ce qu'on mélange avec le solvant organique tout d'abord l'alcoxyde ou le sel organique du métal alcalin, puis l'alcoxyde de silicium, enfin le sel organique de plomb.

19. Procédé selon l'une des revendications 13 à 18, caractérisé en ce qu'on utilise un tétraalkoxyde de silicium, notamment le tétraméthoxy ou tétraéthoxysilane.

20. Procédé selon l'une des revendications 13 à 19, caractérisé en ce qu'on utilise un alcoxyde de potassium.

21. Procédé selon l'une des revendications 13 à 20, caractérisé en ce qu'on utilise comme sel organique de plomb, le sel d'un acide aliphatique saturé.

22. Procédé selon la revendication 21, caractérisé en ce qu'on utilise comme sel de plomb l'acétate de plomb.

23. Procédé selon l'une des revendications 13 à 22, caractérisé en ce que le solvant organique comprend des ethers-oxydes glycoliques.

24. Procédé selon l'une des revendications 13 à 22, caractérisé en ce que le solvant organique comprend un acide aliphatique saturé et un alcool saturé.

25. Procédé selon la revendication 24, caractérisé en ce que l'acide est l'acide acétique et l'alcool l'éthanol.

26. Procédé de préparation d'un précurseur d'un composé verrier à base de silice, de plomb et d'un métal alcalin caractérisé en ce que l'on calcine le gel obtenu par le procédé selon l'une des revendications 13 à 25.

27. Procédé de préparation d'un composé verrier à base de silice, de plomb et d'un métal alcalin, caractérisé en ce qu'on fond le précurseur obtenu par le procédé selon la revendication 26.

# FIG.1

# FIG.2

# FIG.3

-96    -108

-10   -50   -90   -140   -190
PPM

# FIG.4

-96    -108

-10   -50   -90   -140   -190
PPM

EP 0 374 024 A1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | DE-A-2 008 653  (OWENS-ILLINOIS)<br>* Revendications; page 4, lignes 4-9 *<br>--- | 1 | C 03 C    1/00<br>C 03 B    8/02<br>C 03 C    3/102 |
| A | FR-A-2 606 401  (RHONE-POULENC CHIMIE DE BASE)<br>* Revendications *<br>--- | 1 | |
| A | CHEMICAL ABSTRACTS, vol. 110, no. 22, 29 mai 1989, Columbus, Ohio, US; & JP-A-63 277 525 (NIPPON SHEET GLASS CO. LTD) 15-11-1988<br>* Résumé *<br>----- | 1 | |

**DOMAINES TECHNIQUES RECHERCHES (Int. Cl.5)**

C 03 C
C 03 C

**Le présent rapport a été établi pour toutes les revendications**

| Lieu de la recherche | Date d'achèvement de la recherche | Examinateur |
|---|---|---|
| LA HAYE | 01-03-1990 | BOUTRUCHE J.P.E. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...............................................................
& : membre de la même famille, document correspondant

EPO FORM 1503 03.82 (P0402)